# EUROPEAN PATENT SPECIFICATION

(11) **EP 0 815 722 B1**
(45) Date of publication and mention of the grant of the patent: **26.11.2003**
(21) Application number: 97610028.9
(22) Date of filing: 01.07.1997
(51) Int. Cl.: A01J 25/12, A01J 25/13, B08B 9/093, B08B 3/04

(54) **A cleaning apparatus and method for cleaning cheese moulds with finely perforated walls**
Reinigungsgerät und Verfahren zum Reinigen von Käseformen mit fein perforierten Wänden
Appareil de nettoyage et méthode pour le nettoyage de moules à fromages à parois finement perforées

(30) Priority: 01.07.1996 DK 71896
(43) Date of publication of application: 07.01.1998
(73) Proprietor: APV Cheese AS, 8653 Them (DK)
(72) Inventor: Teilgard, Jarl, 2013 Skjetten (NO)
(74) Representative: Nielsen, Leif

(56) References cited:
- DE-B- 1 181 478
- FR-A- 2 654 302
- 'Collins Dictionary Of The English Language', 1989, WM. COLLINS PUBLISHERS PTY. LTD., GLASGOW * page 1373 *

## Description

The present invention relates to a method and an apparatus for cleaning of cheese moulds of the type provided with finely perforated walls. Just that type of moulds are predominant in modem production of pressed cheeses, and they function by the whey from the curd mass filled into the moulds during the pressing being forced out through the perforations, these typically having a width of 0.3-0.8 mm, whereafter the rigid cheeses can be released from the moulds for further processing and storing.

Typically, the single moulds are in use 5-15 times per day of production, and it is important that they be cleaned after each pressing operation, as there is a pronounced tendency of cheese mass getting stucked in or at the perforations. Thus, the operative cleaning is not or not alone effected for hygienic reasons, but for ensuring a continued high production capacity of the moulds, the capacity and quality of which will otherwise decrease, the more the perforations would get choked.

It is usual, therefore, that the moulds with associated pressing lids after each pressing and demoulding are moved through a cleaning system, in which the moulds, in inverted positions, are first flushed with lukewarm water for removal of cheese rests and for softening of deposits, whereafter, in a following section, they are cleaned with water at 65-80°C containing a detergent; the moulds are flushed vividly for removing cheese residuals and for cleaning the surfaces and the perforations. Finally, the moulds are subjected to an afterflushing with cold water.

It is also usual, however, that it is recognized that the cleaning process has not been as effective as could be desired, in particular with respect to undesired deposits on the walls of the perforations. The flush water may well exhibit a hard impact against the mould walls, but the perforations are so small that they effectively resist the conveying of such a strong throughflow of water.

From prior art document FR 2654302 is a cheese mould cleaning apparatus known. The type of cheese moulds used in the prior art invention is of the kind where a flexible bag, usually made from cloth, is arranged inside a rigid mould shape. When the cheese in the mould goes through the production line, a first stage is arrived at where hydraulic jacks press the cheese with the flexible bag up throught the rigid member. The cheese is removed from the mould which thereafter proceeds to the cleaning unit. In the cleaning unit the mould is positioned above a high pressure water jet which ejects water at a high pressure such that the flexible bag is pressed upwards and the cheese residue and curt on what is the outside of the bag in comparason to the cheese is violently flushed by the high pressure water ejection device. The inside of the flexible mould bag is washed by additional flushing devices. When the water supply is terminated the mould bags will fold back into the position in the mould and the rigid mould with the mould bag arranged inside is ready for use again.

The invention is based on the consideration that it will be possible to provide for a stronger throughflow through the perforations if care is taken to build up, at one side or the other of the mould walls, a static overpressure of air/liquid which, with full pressure effect, will affect all of the perforations. In practice and with good results, a method has been tested by which the moulds are provided with a tight and tightly sealing lid, while the associated perforated mould lids are connected with respective, tight bowl members, whereafter pressurized water or cleaning liquid is supplied through the respective sealing lids and bowl members into the respective cavities, from which air and liquid will then be forced out at full pressure through all of the perforations.

It has been found that this is a very effective preparatory measure for the passage of the mould parts through the said cleaning system, and there is reason to believe that a treatment according to the invention can widely reduce or even elminate the functions of the conventional cleaning system.

In the following the invention is described in more detail with reference to the drawing, in which:
Fig. 1 is a lateral sectional and exploded view of a system according to the invention;
Fig. 2 is a similar view, shown with the system parts assempled and under operation;
Fig. 3 is a view corresponding to Fig. 1, but here of a system for cleaning pressing lids of the moulds; and
Fig. 4 is a perspective view of another embodiment of a system according to the invention.

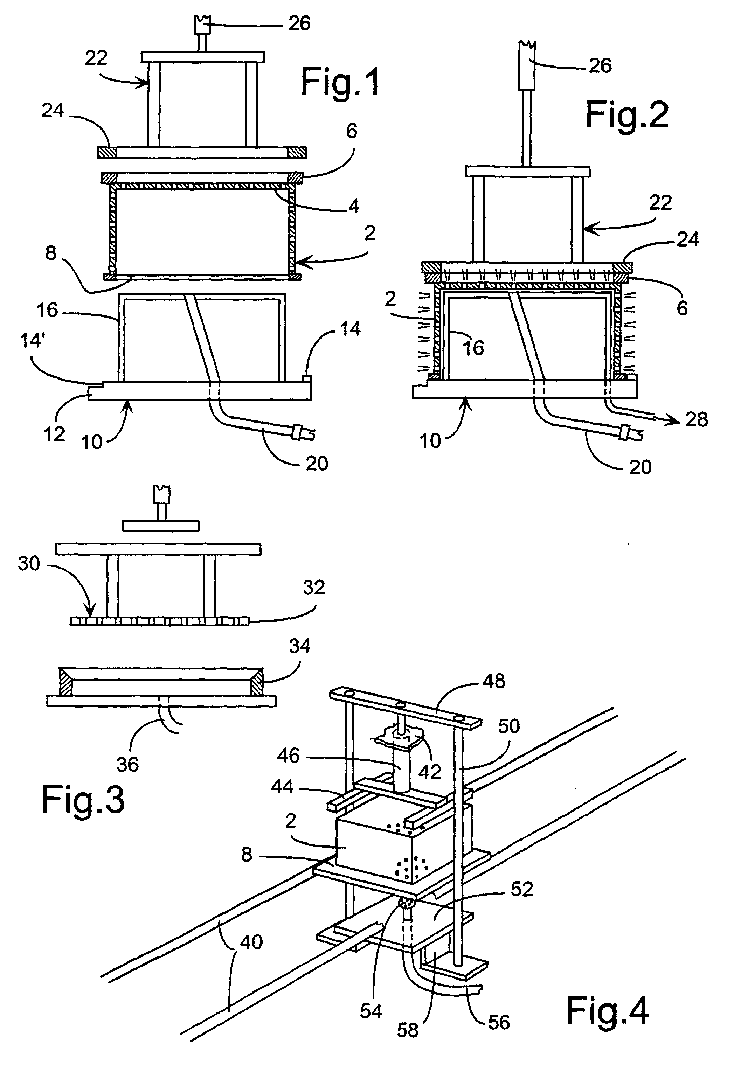

In Fig. 1 a cheese mould 2 is shown in inverted position, i.e. with a perforated bottom wall 4 and an associated bottom support frame 6 facing upwardly and, correspondingly, with its open top side facing downwardly. Underneath the mould is located a base structure 10 comprising a plate or frame 12 with sealing means 14 (shown in the right hand side) for sealingly engaging the downwardly directed top edge 8 of the mould 2, and a box like shell body 16, which is somewhat smaller than the interior space in the mould 2. At a suitable place, here shown at a central top area 18, this shell body is provided with a hole connected to an external pressure conduit 20 for supply of pressurized liquid from a non-illustrated pump. As shown to the left in Fig. 1, instead of the upwardly exposed sealing 14 it is possible to use a support or sealing shoulder 14'. Overhead the mould 2 there is provided a press body 22 with a lower pressing plate or frame 24 for cooperation with the bottom frame 6 of the mould so as to press the mould against the sealing means 14 of the base structure by means of an upper working cylinder 26, with the shell body 16 located inside the mould 2.

This pressed together position is shown in Fig. 2, clearly indicating that the mould 2 is lowered over the base structure 10, with the press body 22 correspondingly lowered. However, the base structure could as well be raised against the mould if the latter is maintained at a fixed level, or even both the mould 2 and the base structure 10 could be raised against the press body 22,24 with the use of lower raising means corresponding to the upper cylinder.

In all of these cases the result will be as shown in Fig. 2, viz. that the mould 2 is substantially filled out by the shell body 16 and is pressed sealingly against the sealing means 14 of the base structure.

When thereafter a liquid under pressure is supplied through the conduit 20, a considerable liquid pressure will be built up in the narrow space between the outside of the shell body 16 and the inside of the mould 2, whereby quite strong, cleaning liquid jets out through all of the perforations in the side and bottom walls of the mould will be created, as indicated in Fig. 2. Hereby it is possible to produce an efficient flushing out of surface deposits in the perforations, and the flushing liquid or mixture of liquid and air can be let out through a bottom drain 28 or any other outlet for the cleaning chamber.

In Fig. 3 a system is shown which is analagous with the one described above, but adapted to handle the pressing lids 30 of the moulds 2, the perforated press lid plate 32 of the lid structure being brought into sealing engagement with a flat flushing box 34, to which pressurized liquid can be supplied through a conduit 36. Then the lid plate 32 can be cleaned in a corresponding manner.

The disclosed technique can be modified or supplemented in many ways, e.g. in arranging for a suction or injection of liquid from the exterior side of the mould for achieving an effective counter flushing cleaning of the perforations. A further possibility is to use a rotating flushing ball in the inner space of the mould, and the discussed cleaning may be supplemented with an active interior cleaning by flushing obliquely upwardly in the inverted mould.

It is considered advantageous that in connection with the building up of a liquid pressure in the interior of the mould, an increase of the air pressure therein will be produced such that during an initial phase there will be provided a useful air exhaustion through the perforations. Optionally, this may be exploited to the effect that instead of the the box body 16 in Figs. 1 and 2 use is made of the said flushing ball or corresponding flushing means for the supply of the liquid, whereby in an initial phase a quite efficient, combined water/air cleaning will take place during the filling of the mould space with liquid, whereafter the liquid supply continues from the flushing means, though now only for the introduction of the pressurized liquid. It is a further possibility to directly arrange for compressed air to be blown into the mould or for that sake into an outer bell member about the mould.

The said use of a flushing ball is schematically illustrated in Fig. 4. which shows a pair of conveyor chains 40 for supplying inverted cheese moulds 2 with edge flanges 8 to a cleaning station, in which a fixed or height adjustable chassis portion 42 carries a top abutment 44 slightly above the mould 2 and an upright cylinder 46 cooperating with a yoke 48 with depending carrier rods 50. These rods carry at their lower ends a mould closing plate 52 on which a flushing ball 54 with a supply hose 56 is mounted. By actuation of the cylinder 46 the plate 52 is raised to close the mould and further to lift the mould into engagement with the top abutment 44, whereafter there is opened for cleansing water to the ball 54. The plate 52 is interchangeably mounted on a support 58 such that the plate size cn be adapted to the size of the mould.

A fully corresponding arrangement can be used for the cleaning of the pressing lids, only with the plate 52 shaped in a box like manner.

It should be mentioned that from another type of cleaning it is known that the moulds and the lids once per day are submersed in a vat with 65-80°C warm water with an added detergent for 15-20 minutes. This can be done with the use of special submersion holders, an as a offshoot of the present invention these holders, instead of just bringing the moulds and lids into stationary positions, may be adapted or driven in such a manner that they will produce a plashing of the units, e.g. with a stroke length of 50 mm, whereby there will steadily be produced alternating over- and underpressures on the sides of the units, such that all the time a certain liquid flow will be generated through the perforations for cleaning thereof.

## Claims

1. A cleaning apparatus for cleaning of cheese moulds (2) of the type having finely perforated walls, said cleaning apparatus comprising a support (10) for the moulds (2), **characterized in that** it comprises a box like shell body (16) or a mould closing plate (52) for delimiting a space next to exterior or interior sides of the mould, and means (20, 36, 54) for introducing a pressure medium into this space.

2. An apparatus according to claim 1, comprising an upwardly exposed sealing (14) or a sealing shoulder (14') adapted for sealing engagement with a top edge (8) of a cheese mould (2).

3. An apparatus according to claim 1, in which the support (10) is constituted by a mould closing plate (52) for supporting a mould (2) in an inverted position thereof.

4. An apparatus according to claim 3, in which the mould closing plate (52) has a filler body (16) that fills out a part of the mould space or a cleaner head such as a flushing ball (54) projecting into this space for enabling an initial flushing of the mould walls by the introduction of the pressure medium.

5. An apparatus according to claim 3 and provided with means (40) for supplying inverted moulds (2) to an operative position above the mould closing plate (52) and means (42) for raising the mould closing plate (52) for closing the mould (2) and further raising of the mould against upper abutment means (44).

6. A method of cleaning cheese moulds (2) of the type having finely perforated walls, **characterized in that** the mould (2) is brought into substantially sealing engagement with a support and/or box like shell body (10,16), said support and/or box like shell body comprising means (20, 36, 54) for building up a static overpressure of air/water inside or outside the mould (2) or, respectively, for flushing the mould (2) from the inside thereof.

7. A method according to claim 6, **characterized in that** the mould (2) is closed by a tightly sealing closure member (14,52) carrying a cleaning head such as a flushing ball (54) projecting into the mould (2), and that pressurized water is supplied solely through this cleaning head for initial flushing of the inside of the mould and for accumulative collection of the flushing water inside the mould, the supply of pressurized water being maintained through a certain period after the mould space hereby being entirely filled with water.

8. A method according to claim 6, **characterized in that** the mould is positioned inside a surrounding box like shell body, which is filled with pressurized water for the building up of a liquid overpressure at the exterior side of the mould.

9. A method of cleaning perforated press lids (32) belonging to cheese moulds (2), **characterized in that** the perforated press lid (32) is brought into sealing engagement with a flat flushing box (34), to which pressurized liquid can be supplied through a conduit (36).

## Patentansprüche

1. Reinigungsgerät zum Reinigen von Käseformen (2) vom Typ mit fein perforierten Wänden, wobei das Reinigungsgerät eine Stütze (10) für die Formen (2) aufweist, **dadurch gekennzeichnet, dass** es einen kastenförmigen Mantelkörper (16) oder eine Formverschlussplatte (52) zum Begrenzen eines Raumes gleich neben Außen- oder Innenseiten der Form sowie Mittel (20, 36, 54) zum Einleiten eines Druckmediums in diesen Raum aufweist.

2. Gerät nach Anspruch 1, mit einer nach oben bloßliegenden Dichtung oder einer Abdichtschulter (14'), die für abdichtenden Eingriff mit einem oberen Rand (8) einer Käseform (2) eingerichtet ist.

3. Gerät nach Anspruch 1, bei dem die Stütze (10) durch eine Formverschlussplatte (52) zum Stützen einer Form (2) in einer umgekehrten Stellung der Form gebildet wird.

4. Gerät nach Anspruch 3, bei dem die Formverschlussplatte (52) einen Füllkörper (16), der einen Teil des Formraumes ausfüllt, oder einen Reinigungskopf wie z.B. eine Spülkugel (54) aufweist, die in diesen Raum vorsteht, um anfängliches Spülen der Formwände durch Einleitung des Druckmediums zu ermöglichen.

5. Gerät nach Anspruch 3 und versehen mit Mitteln (40) zum Zuführen von umgekehrten Formen (2) in eine Betriebsstellung oberhalb der Formverschlussplatte (52) und Mitteln (42) zum Anheben der Formverschlussplatte (52) zum Verschließen der Form (2) und weiteren Anheben der Form gegen obere Anschlagmittel (44).

6. Verfahren zum Reinigen von Käseformen (2) vom Typ mit fein perforierten Wänden, **dadurch gekennzeichnet, dass** die Form (2) in einen im wesentlichen abdichtenden Eingriff mit einer Stütze und/oder einem kastenförmigen Mantelkörper (10, 16) gebracht wird, wobei die Stütze und/oder der kastenförmige Mantelkörper Mittel (20, 36, 54) zum Aufbauen eines statischen Überdruckes von Luft/Wasser innerhalb oder außerhalb der Form (2) beziehungsweise zum Spülen der Form (2) von deren Innenseite her aufweisen.

7. Verfahren nach Anspruch 6, **dadurch gekennzeichnet, dass** die Form (2) durch ein dicht abdichtendes Verschlussglied (14, 52) verschlossen wird, das einen Reinigungskopf wie z.B. eine Spülkugel (54) trägt, die in die Form (2) vorsteht, und dass zum anfänglichen Spülen der Innenseite der Form und zur wachsenden Ansammlung des Spülwassers innerhalb der Form unter Druck stehendes Wasser einzig durch diesen Reinigungskopf zugeführt wird, wobei die Zufuhr von unter Druck stehendem Wasser über einen gewissen Zeitraum aufrechterhalten wird, wonach der Formraum vollständig mit Wasser gefüllt ist.

8. Verfahren nach Anspruch 6, **dadurch gekennzeichnet, dass** die Form innerhalb eines umgebenden kastenförmigen Mantelkörpers angeordnet wird, der für den Aufbau eines Flüssigkeitsüberdruckes auf der Außenseite der Form mit unter Druck stehendem Wasser gefüllt wird.

9. Verfahren zum Reinigen von perforierten Druckdeckeln (32), die zu Käseformen (2) gehören, **dadurch gekennzeichnet, dass** der perforierte Druckdeckel (32) in abdichtenden Eingriff mit einem flachen Spülkasten (34) gebracht wird, dem über eine Rohrleitung (36) unter Druck stehende Flüssigkeit zugeführt werden kann.

## Revendications

1. Appareil de nettoyage pour nettoyer des moules de fromagerie (2) du type comportant des parois finement perforées, ledit appareil de nettoyage comprenant un support (10) pour les moules (2), **caractérisé en ce qu'**il comprend un corps de moulage en forme de boîte (16) ou une plaque de fermeture de moule (52) pour délimiter un espace à proximité des côtés extérieur et intérieur du moule, et des moyens (20, 36, 54) pour introduire un milieu de pression dans cet espace.

2. Appareil selon la revendication 1, comprenant un scellage exposé vers le haut (14) ou un épaulement de scellage (14') adapté pour sceller un engagement avec un bord supérieur (8) du moule de fromagerie (2).

3. Appareil selon la revendication 1, dans lequel le support (10) est constitué d'une plaque de fermeture de moule (52) pour supporter un moule (2) dans une position renversée de celui-ci.

4. Appareil selon la revendication 3, dans lequel la plaque de fermeture de moule (52) comporte un corps de remplissage (16) qui remplit une partie de l'espace du moule ou une tête de nettoyage comme une bille de rincage (54) se projetant dans cet espace pour permettre un rinçage initial des parois du moule par l'introduction du milieu de pression.

5. Appareil selon la revendication 3 et proposé avec des moyens (40) pour amener les moules renversés (2) vers une position d'exploitation au-dessus de la plaque de fermeture de moule (52) et des moyens (42) pour relever la plaque de fermeture de moule (52) pour fermer le moule (2) et pour relever en outre le moule contre les moyens de butée supérieurs (44).

6. Procédé de nettoyage de moules de fromagerie (2) du type comportant des parois finement perforées, **caractérisé en ce que** le moule (2) est amené sensiblement en butée de scellage avec un support et/ou un corps de moulage en forme de boîte (10, 16), ledit support et/ou le corps de moulage en forme de boîte comprenant des moyens (20, 36, 54) pour développer une surpression statique d'air/d'eau à l'intérieur ou à l'extérieur du moule (2) ou, respectivement, pour rincer le moule (2) à partir de l'intérieur de celui-ci.

7. Procédé selon la revendication 6, **caractérisé en ce que** le moule (2) est fermé par un élément de fermeture de scellage serré (14, 52) supportant une tête de nettoyage comme une bille de rinçage (54) se projetant dans le moule (2), et que de l'eau pressurisée est amenée à travers cette tête de nettoyage uniquement pour un rinçage initial à l'intérieur du moule et pour une récupération cumulative de l'eau de rinçage à l'intérieur du moule, l'apport d'eau pressurisée étant maintenu sur une période donnée après que l'espace du moule a ainsi été entièrement rempli avec de l'eau.

8. Procédé selon la revendication 6, **caractérisé en ce que** le moule est positionné à l'intérieur d'un corps de moulage en forme de boîte englobant, qui est rempli avec de l'eau pressurisée pour développer une surpression de liquide au niveau du côté extérieur du moule.

9. Procédé de nettoyage de couvercles de presse perforés (32) appartenant aux moules de fromagerie (2), **caractérisé en ce que** le couvercle de presse perforé (32) est amené en butée de scellage avec une boîte de rinçage plate (34), à laquelle un liquide pressurisé peut être amené à travers un conduit (36).
